# EUROPÄISCHE PATENTSCHRIFT

(11) **EP 1 599 696 B1**
(45) Veröffentlichungstag und Bekanntmachung des Hinweises auf die Patenterteilung: **17.03.2010**
(21) Anmeldenummer: 03782093.3
(22) Anmeldetag: 06.11.2003
(51) Int. Cl.: F25B 41/06

(54) **EXPANSIONSORGAN FÜR EINE KLIMAANLAGE**
EXPANSION DEVICE FOR AN AIR CONDITIONING SYSTEM
ORGANE D'EXPANSION POUR SYSTEME DE CLIMATISATION

(30) Priorität: 12.02.2003 DE 10305947
(43) Veröffentlichungstag der Anmeldung: 30.11.2005
(73) Patentinhaber: ROBERT BOSCH GMBH, 70442 Stuttgart (DE)
(72) Erfinder: WESSNER, Jochen, 73728 Esslingen (DE); HORSTMANN, Peter, 71229 Leonberg (DE); SATZGER, Peter, 70825 Korntal (DE); MIEHLE, Tilman, 71334 Waiblingen (DE); REIF, Martin, 79618 Rheinfelden (DE)
(86) Internationale Anmeldenummer: PCT/DE2003/003687
(87) Internationale Veröffentlichungsnummer: WO 2004/072566

(56) Entgegenhaltungen:
- EP-A- 0 992 727
- DE-A- 10 023 621
- DE-A- 19 853 103
- DE-A- 19 956 830
- US-B1- 6 418 737

## Beschreibung

Die vorliegende Erfindung betrifft ein Expansionsorgan für eine Klimaanlage, insbesondere für eine Klimaanlage eines Kraftfahrzeuges. Des weiteren betrifft die vorliegende Erfindung eine derartige Klimaanlage.

### Stand der Technik

Bei Klimaanlagen, insbesondere Kompressions-Klimaanlagen, wird zunächst eine Verdichtung eines Kältemittels durch einen Verdichter, den sogenannten Klimakompressor oder einfach Kompressor, durchgeführt, um die innere Energie des Kältemittels zu erhöhen. Das komprimierte Kältemittel wird anschließend in einem Kondensator oder Verflüssiger durch einen Wärmeaustausch gekühlt. Das Kältemittel verflüssigt sich dabei auf Grund der mit dem Wärmeaustausch einhergehenden Wärmeabgabe. Anschließend wird das verflüssigte Kältemittel durch eine Drosselstelle der Klimaanlage geführt, wobei diese Drosselstelle ein Expansionsorgan aufweist. Beim Hindurchtreten des Kältemittels durch das Expansionsorgan dehnt sich das Kältemittel aus. Dem Expansionsorgan ist in der Regel ein Verdampfer nachgeschaltet, der als Wärmetauscher betrieben wird, um die frei werdende Kälte auf ein anderes Medium zu übertragen. Dieses andere Medium kann beispielsweise Luft sein, die einem Fahrzeugheiz- bzw. Kühlsystem zugeführt wird.

Aus dem Stand der Technik ist es bekannt, zur Verbesserung des thermischen Wirkungsgrades einer Klimaanlage, auf der Hochdruckseite des geschlossenen Kältemittelkreises, das im Kondensator befindliche Kältemittel in einen überkritischen Zustand zu bringen, um dadurch die Wärmeaustauschleistung der Klimaanlage zu verbessern. Der Kondensator wird dann als Gaskühler bezeichnet, da keine Kondensation mehr auftritt, sondern lediglich eine Abkühlung des überkritischen Gases. Darüber hinaus ermöglichen es überkritisch betriebene Verdichter-Kältemaschinen, dass ein Kältemittel (z.B. Kohlendioxid) mit einem kleineren Verdichtungsverhältnis genutzt werden kann.

Durch die Steuerung der Drosselung an dem Expansionsorgan des Kältemittelkreislaufs kann der Druck auf der Hochdruckseite des thermodynamischen Kreisprozesses gesteuert bzw. geregelt werden, so dass die spezifische Kälteleistung der Klimaanlage damit variiert werden kann. So ist es möglich, eine maximale effektive Leistungszahl zu erhalten, in dem der Druck der Hochdruckseite des thermodynamischen Kältemittelkreises in Abhängigkeit von der Temperatur am Gaskühlerausgang oder der Umgebungstemperatur in angepasster Weise eingestellt wird.

Insbesondere bei Kälteanlagen mit Kältemitteln, die auf Grund ihrer thermodynamischen Eigenschaften die Wärme im überkritischen Bereich abgeben, kann der Druck bei der Wärmeabgabe unabhängig von der Temperatur eingestellt werden. Um diesen, gegenüber Kältemitteln mit Wärmeabgabe im Nassdampfbereich zusätzlichen Freiheitsgrad in vorteilhafter Weise nutzen zu können, ist der Einsatz von steuer- und/oder regelbaren Expansionsventilen als Expansionsorgan bekannt. Derzeit werden sowohl rein mechanische, als auch elektrisch angetriebene Expansionsventile entwickelt, wobei jede dieser Entwicklungen eines neuen Expansionsorgans für einen Kältemittelkreislauf einer Klimaanlage mit hohen Kosten verbunden ist.

Bei Klimaanlagen mit Kondensation kann durch die Steuerung der Drosselung an dem Expansionsorgan des Kältemittelkreislaufs die Überhitzung des Kältemittels aus dem Verdampfer so gesteuert werden, dass die Kälteleistung optimal ist

Expansionsventile werden überwiegend als Ventil mit Kugelsitz und elektromagnetischem Antrieb ausgeführt. Diese Ventile weisen den Nachteil einer zum Teil extremen Geräuschentwicklung in bestimmten Betriebszuständen auf. Insbesondere bei kleinen Volumenströmen des Kältemittels und damit bei fast geschlossenen Ventilen, kann es dazu kommen, dass die Ventilkugel auf den Sitz aufschlägt und somit zu einer deutlichen Geräuschentwicklung führt. Aus diesem Grunde ist eine Regelung des Druckes über dem Expansionsorgan mit Ventilen vom Kugelsitztypus problematisch, da diese mit einer zuvor beschriebenen Geräuschentwicklung einhergehen.

Aus der DE 100 23 621 A1 ist ein Kraftstoffeinspritzventil für Brennkraftmaschinen bekannt, das einen Schiebesitz für einen geräuscharmen Betrieb aufweist. Das Kraftstoffeinspritzventil weist eine Steueröffnung auf, die einen oberen schlitzförmigen und einen unteren etwas rechteckförmigen Bereich enthält. Alternativ können aber auch eine trapezförmige oder eine mit der Charakteristik einer e-Funktion beaufschlagte Steueröffnung zum Einsatz kommen.

Aus der EP 0 992 727 A2 ist weiterhin eine Ventilanordnung insbesondere als pulsbreitenmoduliertes Expansiionsventil einer Kälteanlage bekannt. Die Durchtrittsöffnung in Gegenfläche zu einem Schieber der Ventilanordnung ist in Bewegungsrichtung des Schiebers derart ausgebildet, dass die Öffnung zunächst nur langsam und dann zunehmend schneller freigegeben wird. Insbesondere kann dabei der Öffnungsquerschnitt in Bewegungsrichtung des Schiebers spitz zulaufend ausgebildet sein, d.h. derart keilförmig, dass zunächst nur eine Keilspitze vom Schieber freigegeben wird. Auf diese Weise wird ein abrupter Wechsel zwischen völlig geschlossener und geöffneter Durchtrittsöffnung vermieden.

Nachteil der zuvor erwähnten Ventilarten ist jedoch die schlechte Dichtheit des voll geschlossenen Ventils. Durch den funktionsbedingten Spalt zwischen Schieber (Kolben) und Ventilsitz (Führung) strömt bei hoher Druckdifferenz, wie sie in Klimaanlagen insbesondere mit dem Kältemittel CO₂ unabdingbar auftritt, ein Kältemittelvolumenstrom, der für den Betrieb einer Kälteanlage zu groß ist. Insbesondere kann durch diese Leckage bei niedrigen Drücken kein ausreichend hoher Druck aufgebaut werden, um die Klimaanlage in einem günstigen Zustand (Wirkungsgrad/Leistung) betreiben zu können. Aus diesem Grunde erscheinen Schiebsitzventile als Expansionsorgan für einen Klimakreislauf unbrauchbar.

Die der Erfindung zu Grunde liegende Aufgabe ist es, ein Expansionsventil für einen Kältemittelkreislauf darzustellen, welche eine gute Regelbarkeit bei einem geräuscharmen Betrieb in allen Betriebszuständen der Klimaanlage und eine ausreichende Dichtheit im geschlossenen Zustand des Expansionsventils gewährleistet.

Des weiteren liegt der Erfindung die Aufgabe zu Grunde, eine Klimaanlage, insbesondere eine Klimaanlage für ein Kraftfahrzeug zu realisieren, welche durch den Einsatz von steuer- und/oder regelbaren Expansionsventilen eine Verbesserung des thermischen Wirkungsgrades der Klimaanlage ermöglichen.

Die Aufgabe wird gelöst durch ein Expansionsorgan mit den Merkmalen des Anspruchs 1. Die weitergehende Aufgabe wird gelöst durch eine Klimaanlage mit den Merkmalen des Anspruchs 12.

### Vorteile der Erfindung

Durch die Ausbildung des erfindungsgemäßen Expansionsorgans als elektromagnetisches Schiebesitzventil mit zumindest einem Ventilkolben und einem Magnetanker zur Bewegung des Ventilkolbens ist es möglich, in vorteilhafter Weise ein Expansionsventil zu realisieren, das eine gute Regelbarkeit bei insgesamt geräuscharmen Betrieb in allen Betriebszuständen ermöglicht und eine ausreichende Dichtheit im geschlossenen Zustand des Expansionsventils aufweist.

Der Ventilkolben und/oder der Magnetanker des erfindungsgemäßen Expansionsorgans besitzen zumindest eine Bohrung und/oder zumindest einen Kanal, die/der gewährleistet, dass der Druck im Bereich des Ventilkolbens und des Magnetankers annähernd gleich groß ist Auf diese Weise wird ein Druckausgleich auf der gesamten Niederdruckseite erreicht. Die Druckdifferenz liegt somit nur im Bereich des Zulaufkanals für das Ventil

Weiterhin besitzt der Ventilkolben mindestens eine Drosselöffnung, deren Gesamtfläche im Bereich von ca. 1 bis 7 mm² liegt. Als besonders vorteilhaft haben sich Konturen für die Drosselöffnungen herausgestellt, die in Richtung der Ventilachse gestuft bzw. trapezförmig geschlitzt sind. Durch die unterschiedlichen Konturen des oder der Drosselschlitze(s) kann das Verhältnis von axialem Weg des Ventilkolbens zur Öffnung des Drosselquerschnitts und somit die Ventilcharakteristik den individuellen Applikationsanforderungen der Klimaanlage angepasst werden.

Durch eine Modulation der Spaltgeometrie eines herkömmlichen Schiebesitzventils lässt sich die Dichtheit eines solchen Ventils deutlich verbessern. Insbesondere kann durch eine Verlängerung des Ventilkolbens die Spaltgeometrie zwischen Ventilkolben (Schieberelement) und Kolbenführung (Sitz des Schiebers) des Schiebesitzventils optimiert werden. Eine solche Modifikation ermöglicht erst die Verwendung eines Schiebesitzventils als Expansionsorgan in einer Klimaanlage. Dabei haben sich eine Spaltgeometrie mit einer Spalthöhe zwischen Ventilkolben (Schieberelement) und Kolbenführung (Sitz des Schiebers), die kleiner als 1.5 µm bzw. vorzugsweise kleiner als 8 µm ist, sowie einer Spaltlänge zwischen Ventilkolbens und Kolbenführung im Bereich von 0,1 bis 5 mm, vorzugsweise im Bereich von 1 bis 2 mm, als besonders vorteilhaft erwiesen für die Anwendbarkeit des Schiebesitzventils als Expansionsorgans in einem Klimakreislauf

Die Verwendung des erfindungsgemäßen Expansionsorgans in einer Klimaanlage ermöglicht in vorteilhafter Weise die Verbesserung des thermischen Wirkungsgrades einer Klimaanlage ohne die zur Entwicklung eines neuen Expansionsorgans notwendigen hohen Kosten.

Durch die in den Unteransprüchen aufgeführten Merkmale sind vorteilhafte Weiterbildungen des erfindungsgemäßen Expansionsorgans bzw. der erfindungsgemäßen Klimaanlage gegeben.

Insbesondere können bei speziellen Ausführungsbeispielen des erfindungsgemäßen Ventils zwei oder mehre Drosselöffnungen derart positioniert sein, dass die auf die Zylinderoberfläche des Ventilkolbens des Ventils einwirkende Kraft zu null resultiert.

Die Reibungskräfte innerhalb des Ventils und damit auch die von einem Ventilaktuator aufzubringende Kraft zur Batätigung des Ventils lässt sich in vorteilhafter Weise dadurch reduzieren, dass beispielseweise der Ventilkolben, der Stößel, der Magnetanker oder aber auch die Kolbenführung des Ventils reibungsarm beschichtet werden. Insbesondere ist eine Teflon- oder Kohlenstoffbeschichtung aufgrund ihrer geringen Wechselwirkung mit dem Kälttemittel vorteilhaft.

Als besonders vorteilhaft hat sich ein Expansionsorgan in Form eines Schiebesitzventils vom Typ "Bosch ZME (Zumesseinheit) Nr. 0928400 XXX" herausgestellt. XXX bezeichnet dabei die Steckervariante sowie Größe und Kontur der Drosselöffnung Derartige Drucksteuerventile sind beispielsweise zur Steuerung des Zulaufs zur Hochdruckpumpe einer Kraftstoffeinspritzanlage vorgesehen. Die Verwendung eines aus einem anderen Gebiet der Technik prinzipiell bereits bekannten Magnetventils als Expansionsorgan einer Klimaanlage führt zu einer deutlichen Reduzierung der Entwicklungs- bzw. Herstellungskosten sowohl des Expansionsorgans, als auch der gesamten Klimaanlage. Obwohl das Ventil normalerweise im Einspritzsystem bei einem Druck von ca 10 bar betrieben wird, wurde herausgefunden, dass es ohne weitere Probleme auch in dem deutlich höheren Druckbereich beispielsweise eines CO₂ - Kältesystems von ca. 150 bar zuverlässig eingesetzt werden kann.

In einem vorteilhaften Ausführungsbeispiel des erfindungsgemäßen Expansionsorgans sind die internen Dichtungen des Ventils "Bosch ZME (Zumesseinheit) 0928400 XXX" durch eine auf den Magnetkern des Ventils beispielsweise aufgeschweißte Dichthülse ersetzt. Dies führt in vorteilhafter Weise dazu, dass das Ventil mittels der aufgeschweißten Hülse nach außen dicht ist. Das Material dieser Dichthülse ist derart gewählt, dass eine negative Wechselwirkung, beispielsweise des CO₂-Kältemittels auf das Material der Dichthülse verhindert wird.

Das erfindungsgemäße Expansionsorgan besitzt ein Steckerelement, über das ein Ansteuersignal für den Betrieb des Ventils zugeführt werden kann. Als Ansteuersignal lässt sich beispielsweise ein pulsweitenmoduliertes Signal mit einer Frequenz im Bereich von 100 bis 800 Hz verwenden. Vorzugsweise lässt sich das erfindungsgemäße Expansionsorgan mit einem Ansteuersignal im Bereich von 250 bis 400 Hz betreiben. Diese vorteilhafte Ansteuerfrequenz des Expansionsorgans liegt oberhalb der für die Kraftstoffdirekteinspritzung verwendeten Frequenzen. Durch diese Maßnahme werden u.a. Schwingungen in der Anlage wie z.B. das "Hakeln" des Expansionsventils vermieden. In einer vorteilhaften Weise lässt sich eine weitere Verringerung von Schwingungen durch eine Modulation des Tastverhältnisses des pulsweitenmodulierten Signals mit einer geringeren Frequenz als die Frequenz der Pulsweitenmodulation, insbesondere mit Frequenzen von 10 Hz bis 100 Hz, erreichen.

Das Expansionsorgan kann auch durch die Parallelschaltung mehrerer Zumesseinheit-Ventile realisiert werden, so dass der regelbare Volumenstrom der erfindungsgemäßen Klimaanlage erhöht ist.

Durch die erfindungsgemäße Adaption und Modifikation eines aus einem anderen Gebiet der Technik bereits prinzipiell bekannten Drucksteuer-Magnetventils als Expansionsorgan einer Klimaanlage werden die Entwicklungs- bzw. Herstellungskosten für ein solches Ventil deutlich gesenkt. Es wurde eine Ventil-Technologie für Klimaanlagen gefunden, die es ermöglicht, ein Expansionsventil für den Kältemittelkreislauf der Klimaanlage darzustellen, das eine gute Regelbarkeit und einen geräuscharmen Betrieb in allen Betriebszuständen und gleichzeitig eine hinreichende Dichtheit des voll geschlossenen Ventils gewährleistet.

Die Verwendung eines solchen Ventils in einer Klimaanlage führt zu einer deutlichen Verbesserung des thermischen Wirkungsgrades der Klimaanlage.

Weitere Vorteile und Merkmale des erfindungsgemäßen Expansionsorgans bzw. der erfindungsgemäßen Klimaanlage ergeben sich aus der nachfolgenden Beschreibung eines Ausführungsbeispiels.

Zeichnungen

In der Zeichnung ist ein Ausführungsbeispiel des erfindungsgemäßen Expansionsorgans sowie ein erfindungsgemäßer Kältemittelkreislauf unter Verwendung eines solchen Expansionsorgans dargestellt, die in der nachfolgenden Beschreibung näher erläutert werden sollen. Die Figuren der Zeichnung, deren Beschreibung sowie die Ansprüche enthalten zahlreiche Merkmale in Kombination.

Es zeigt
- Figur 1: eine schematische Darstellung einer Ausführungsform einer erfindungsgemäßen Klimaanlage,
- Figur 2: ein Ausführungsbeispiel eines erfindungsgemäßen Expansionsorgans in einem Längsschnitt,
- Figur 3: eine schematische Darstellung eines ersten Ausführungsbeispiels eines Ventilkolbens eines erfindungsgemäßen Expansionsorgans,
- Figur 4: eine schematische Darstellung eines zweiten Ausführungsbeispiels eines Ventilkolbens eines erfindungsgemäßen Expansionsorgans,
- Figur 5: eine schematische Darstellung der Durchfluss-Charakteristik für den Ventilkolben des ersten Ausführungsbeispiels,
- Figur 6: eine schematische Darstellung der Durchfluss-Charakteristik für das zweite Ausführungsbeispiel eines Ventilkolbens.

### Beschreibung einer bevorzugten Ausführungsform

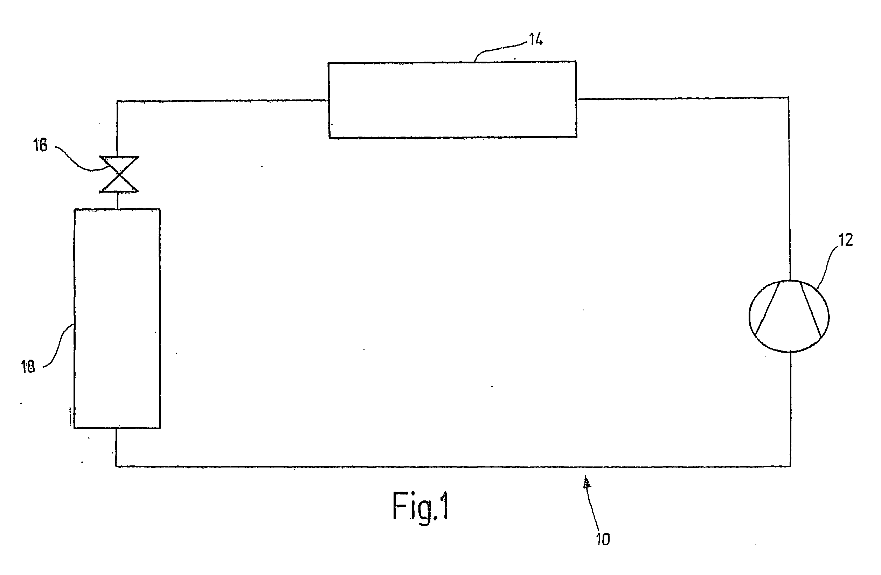

Die in Figur 1 im Prinzip dargestellte Klimaanlage 10 umfasst einen Kompressor 12, einen Kondensator oder Gaskühler 14, ein Expansionsorgan 16 und einen Verdampfer 18, die über entsprechende Verbindungsmittel 20 miteinander verbunden sind und einen Kältemittelkreislauf bilden.

Die Komponenten dieses Kreislaufes werden nach Art eines Kompressionskältekreislaufes, wie dieser eingangs erläutert wurde, betrieben. Die in Figur 1 dargestellte Ausführungsform einer erfindungsgemäßen Klimaanlage unterscheidet sich vom Stand der Technik dadurch, dass das Expansionsorgan 16 durch mindestens ein Schiebesitzventil, insbesondere ein Zumesseinheit-Ventil vom Typ "Bosch ZME (Zumesseinheit) Nr. 928400 XXX" gebildet ist. Dieser Typ von Magnetventil wird üblicherweise im Zusammenhang mit der Kraftstoffdirekteinspritzungenutzt. Dabei bezeichnet XXX der Typencodierung dieses Ventils die Steckervariante sowie Größe und Kontur der Drosselöffnung, die auf Grund unterschiedlicher Applikationen variieren kann.

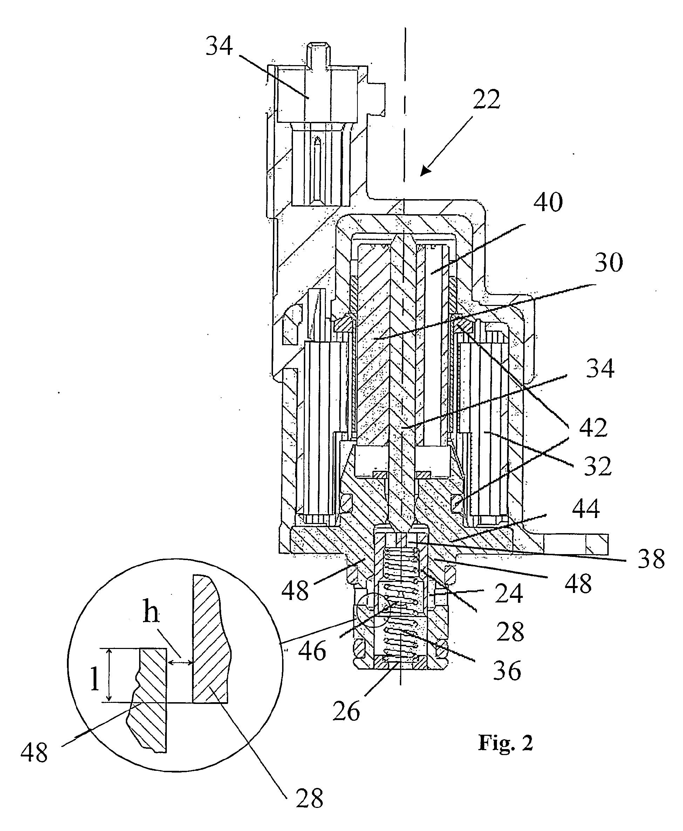

Figur 2 zeigt den Querschnitt durch ein erfindungsgemäßes Expansionsorgan, an dem dessen prinzipieller Aufbau im Folgenden dargestellt werden soll.

Das Ventil 22, welches als Expansionsorgan 16 in einer Klimaanlage beispielsweise gemäß Figur 1 Anwendung findet, dient dazu, den Hochdruck in einer Klimaanlage, insbesondere in einer CO₂-Kälteanlage, zu regeln. Dies geschieht dadurch, dass das Kältemittel im Expansionsorgan 16 bzw. 22 gezielt auf einen niedrigen Druck gedrosselt wird (Expansion). Das erfindungsgemäße Expansionsorgan 22 besitzt einen Zulaufkanal 24 sowie einen Ablaufkanal 26, deren Verbindung über einen Ventilkolben 28 in gewünschter Weise geöffnet bzw. geschlossen werden kann.

Das Ventil 22 weist zur Betätigung des Ventilkolbens 28 einen Magnetanker 30 auf, der von einer außen liegenden Magnetspule 32 angetrieben wird. Die Magnetspule 32 wird über ein Steckerelement 34 mit einem entsprechenden Ansteuersignal beaufschlagt. Das Ansteuersignal für den Betrieb des erfindungsgemäßen Ventils ist ein pulsweitenmoduliertes bzw. analoges Signal mit einer Frequenz von typischerweise 100 bis 800 Hz. Vorzugsweise wird das erfindungsgemäße Expansionsorgan bei einer Frequenz von 250 bis 400 Hz betrieben.

Der Magnetanker 30 wirkt über einen Stößel 34 auf den Ventilkolben 28 ein. Gegen die Magnetkraft diese Aktuators wirkt eine Feder 36, so dass bei gezielter Bestromung der Magnetspule 32 jede beliebige Position des Ventilkolbens 28 über ein Kräftegleichgewicht zwischen - im Wesentlichen - der Federkraft der Feder 36 und der Magnetkraft auf den Magnetanker 30 eingestellt werden kann.

Es wirken nur sehr geringe Druckkräfte auf den Ventilkolben 28 bzw. den Magnetanker 30, da beide (Ventilkolben bzw. den Magnetanker) Kanäle und/oder Bohrungen 38 bzw. 40 aufweisen. Diese Kanäle bzw. Bohrungen sorgen für einen Druckausgleich auf der gesamten Niederdruckseite des Ventils. Die Druckdifferenz über dem Ventil liegt somit nur auf der Zylinderoberfläche des Ventilkolbens 28 im Bereich des Zulaufkanals 24 an. Somit treten lediglich geringe Reibungskräfte bei der Bewegung des Ventilkolbens 28 auf.

Der vom Kältemedium beaufschlagte Bereich des Ventils 22 ist durch Dichtungen 42 zur Umgebung hin abgedichtet. Die Dichtungen, die beispielsweise in Form von O-Ringen ausgebildet sind, bestehen in vorteilhafter Weise aus einem Material, welches für den Kontakt mit dem Kältemittel geeignet ist. Bei einer Verwendung von beispielsweise CO₂ als Kältemittel ist Teflon ein geeignetes Material für die O-Ringe. Negative Wechselwirkungen des CO₂-Kältemittels mit den Dichtelementen gilt es zu verhindern, da anderenfalls eine Zerstörung der Dichtelemente durch beispielsweise eine explosive Dekompression von in das Material hinein diffundierendem Kältemittel die Folge wäre.

Aus dem selben Grund ist es daher gleichermaßen vorteilhaft, das Lager zur Führung des Ventilankers aus einem mit dem Kältemittel nicht in Wechselwirkung geratenden Material auszubilden. Eine höhere Dichtheit des Ventils nach außen kann beispielsweise auch durch eine durchgängige Hülse erreicht werden, die um den Magnetanker 30 herumgreift und mit dem Magnetkern 44 des Ventils verschweißt, verlötet oder andersartig verbunden ist.

Das erfindungsgemäße Ventil 22 dient dazu, den Hochdruck in einer Klimaanlage 10 in definierter Weise auf einen niedrigen Druck expandieren zu lassen. Diese Drosselung findet in einem oder mehreren Drosselschlitzen 46 statt, die im die Zylinderfläche des Ventilkolbens 28 des Ventils 22 eingearbeitet sind.

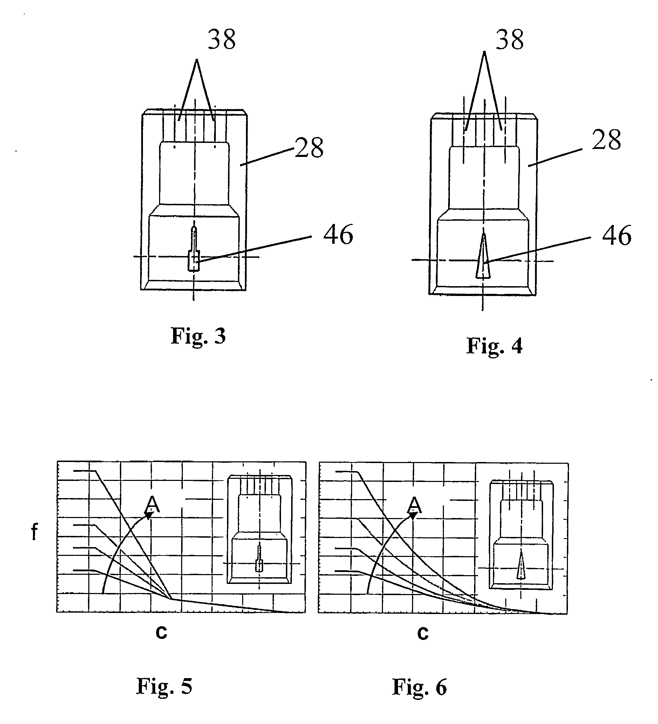

In Figur 3 und Figur 4 sind zwei Ausführungsbeispiele für Drosselschlitze 46 dargestellt. Der Übersicht halber ist jeweils nur ein Drosselschlitz pro Ventilkolben 28 dargestellt. In anderen Ausführungsbeispielen ist es selbstverständlich möglich, eine beliebige Anzahl entsprechend geformter Drosselschlitze 46 in der Zylinderform des Ventilkolbens 28 auszubilden. Die typische Drosselquerschnittsfläche sollte dabei in einem Bereich von ca. 1 bis 7 mm² liegen. Figur 3 zeigt das Beispiel eines gestuften Drosselschlitzes, wohingegen der Drosselschlitz gemäß Figur 4 eine trapezförmige Kontur aufweist. Andere Konturen für die Drosselschlitze 46 sind selbstverständlich auch möglich. So kann sich beispielsweise die Kontur des mindestens einen Drosselschlitzes in axialer Richtung gegenüber einer trapezförmigen Erweiterung mehr oder weniger stark konkav oder konvex stetig erweitern.

Durch die axiale Bewegung des Ventilkolbens 28 in der Führung 48, welche im unteren Teil des Magnetkerns 44 des Ventils 22 ausgebildet ist, wird je nach Stellung des Ventilkolbens 28 relativ zum Zulaufkanal 24 nur ein Teil des bzw. der Drosselschlitze 46 durchströmt und somit die Drosselleistung variiert. Durch eine geeignete Positionierung der Drosselschlitze 46 in dem Ventilkolben 28 lässt sich auch erreichen, dass das erfindungsgemäße Ventil 22 entweder geöffnet oder geschlossen ist, wenn es stromlos geschaltet ist.

Bei gegebenem Volumenstrom durch das Ventil 22 erhöht sich die Druckdifferenz über dem Drosselschlitz 46 mit Verringerung des Drosselquerschnitts. Durch die Veränderung des Drosselquerschnitts kann somit der Druck am Eintritt des Expansionsventils 16 bzw. 22 (Hochdruck der Kälteanlage) gezielt eingestellt werden. Ebenso kann bei veränderlichem Volumenstrom der Hochdruck der Kälteanlage 10 auf gewünschte Werte durch Anpassung der Kontur des Drosselquerschnitts 46 eingestellt werden.

Durch unterschiedliche Konturen der Drosselschlitze 46, wie sie beispielsweise in Figur 3 bzw. Figur 4 wiedergegeben sind, kann das Verhältnis von axialem Weg des Ventilkolbens 28 zur Öffnung des Drosselquerschnitts und somit die Ventilcharakteristik des erfindungsgemäßen Expansionsorgans variiert werden.

Figur 5 bzw. 6 geben jeweils in einer schematischen Darstellung die Ventilcharakteristik des erfindungsgemäßen Expansionsorgans bei Verwendung eines Ventilkolbens 28 mit Drosselquerschnittskonturen gemäß Figur 3 bzw. Figur 4 wieder. Der Übersicht halber sind die Ventilkolben 28 gemäß Figur 3 bzw. Figur 4 nochmals in der Ventilcharakteristik dargestellt. Die Abszisse der grafischen Darstellung gemäß Figur 5 bzw. Figur 6 entspricht dem Hub des Ventilkolbens 28 und ist somit eine Funktion des an das Expansionsorgans angelegten Stroms c. Auf der Ordinate aufgetragen ist der Durchfluss f, der im Wesentlichen dem Drosselquerschnitt bei der jeweiligen Hubstellung des Ventilkolbens entspricht. Die einzelnen Kurven geben die Ventilcharakteristiken bei unterschiedlichen Gesamtdrosselquerschnitten A wieder, wobei der eingezeichnete Pfeil die Richtung vergrößerter Drosselquerschnitte A andeutet. Die typische Drosselquerschnittsfläche A liegt dabei in einem Bereich von ca. 1 bis 7 mm².

Mit Hilfe der speziellen Drosselquerschnittsform, dem an das Expansionsorgan 22 anzulegenden Ansteuersignal, sowie der Federcharakteristik der Gegenfeder 36 lässt sich eine optimierte Ventilcharakteristik für den Klimaanlagenkreislauf 10 realisieren. Verwendet man für die Ansteuerung der Magnetspule 32 ein pulsweitenmoduliertes oder anderweitig spannungs- oder stromgeregeltes Signal, so kann mit dem erfindungsgemäßen Ventil 22 über eine Regelung oder Steuerung der Volumenstrom des Kältemittels bzw. der Hochdruck des Kältemittels geregelt oder gesteuert werden.

Ein voll geschlossenes Schiebesitzventil weist typischerweise eine innere Leckage auf, die von der Druckdifferenz über dem Ventil und den Spalten zwischen dem Ventilkolben 28 und der Ventilführung 48 abhängt. Figur 2 zeigt in einer vergrößerten Detaildarstellung zudem einen Ausschnitt aus der Spaltgeometrie zwischen dem Ventilkolben 28 und der Ventilführung 48. Um eine hohe Dichtheit des voll geschlossenen Expansionsorgans zu erreichen und damit die prinzipielle Möglichkeit, auch bei kleinsten Volumenströmen noch einen definierten Hochdruck einregeln zu können, zu haben, sind in dem erfindungsgemäßen Expansionsorgan die Spalthöhe h bzw. die Spaltlänge 1 zwischen dem Ventilkolben 28 (Schieber) und der Kolbenführung 48 (Sitz des Schiebers) derart modifiziert, dass eine vorgebbare, ausreichende Dichtheit des voll geschlossenen Expansionsorgans gewährleistet ist.

Dies kann beispielsweise durch eine geeignete Wahl der Spaltgeometrie (Höhe h zu Länge 1), beispielsweise durch die Verringerung der Spalthöhe h und/oder die Verlängerung 1 des Spaltes erreicht werden. Beispielsweise lässt sich der Ventilkolben 28 eines Ventils vom Typ "Bosch ZME (Zumesseinheit) Nr. 0928400 XXX" verlängern, um eine entsprechende Verlängerung des Führungsspaltes zu erzielen. Andererseits lässt sich durch entsprechende Toleranzauswahl bei den Boschventilen der Nr. 0928400 XXX ein Ventil selektieren, das die hohen Anforderungen, die an ein Expansionsorgan für eine Klimaanlage gestellt werden, erfüllt.

Eine Möglichkeit die Toleranz in vorteilhafter Weise zu reduzieren, besteht darin, den Ventilkolben (28) und/oder die Kolbenführung reibungsarm zu beschichten, wie z.B mit einer Teflon- oder Kohlenstoffbeschichtung.

Das erfindungsgemäße Expansionsorgan ist nicht auf das in der Beschreibung aufgeführte Ausführungsbeispiel beschränkt. Das erfindungsgemäße Expansionsorgan ist darüber hinaus nicht beschränkt auf die Verwendung in dem dargestellten Kältemittelkreis einer Klimaanlage. Insbesondere ist die erfindungsgemäße Klimaanlage nicht beschränkt auf die Verwendung von CO₂ als Kältemittel.

Des weiteren ist die erfindungsgemäße Klimaanlage nicht beschränkt auf die Verwendung lediglich eines Ventils als Expansionsorgan. In vorteilhafterweise ist es möglich, dass das Expansionsorgan 16 der erfindungsgemäßen Klimaanlage mehrere Zumesseinheit-Ventile 22 aufweist, die zueinander parallel geschaltet sind.

Des weiteren ist es möglich, die erfindungsgemäße Klimaanlage 10 prinzipiell auch als Wärmepumpe zu betreiben. Die hierzu zusätzlichen Bestandteile zur Umkehrung des Kreisprozesses sind aus dem Stand der Technik bekannt und brauchen nicht weiter erörtert zu werden.

## Patentansprüche

1. Expansionsorgan (16) zur Regelung des Hochdrucks eines Kältemittels in einer Klimaanlage (10), wobei das Expansionsorgan (16) in der Art eines Schiebesitzventils (22) mit zumindest einem Ventilkolben (28) und einem Magnetanker (30) zur Bewegung des Ventilkolbens (28) ausgebildet ist, wobei der Ventilkolben (28) zumindest eine im Wesentlichen schlitzförmige und in axialer Richtung im Zylindermantel des Ventilkolbens (28) verlaufende Drosselöffnung (46) aufweist, **dadurch gekennzeichnet, dass** der Ventilkolben (28) und/oder der Magnetanker (30) zumindest eine Bohrung (40) und/oder zumindest einen Kanal (38) besitzen, die/der gewährleistet, dass der Druck im Bereich des Ventilkolbens (28) und des Magnetankers (30) annähernd gleich groß ist, das die zumindest eine Drosselöffnung (46) eine Gesamtöffnungsfläche im Bereich von ca. 1 bis 7 mm² hat und dass die Spaltgeometrie zwischen Ventilkolben (28) und einer Kolbenführung (48) des Schiebesitzventils (22) zur Erzielung einer vorgebbaren Dichtheit im geschlossenen Zustand derart gewählt ist, dass eine Spalthöhe (h) kleiner als 15 Mikrometer, vorzugsweise kleiner 8 Mikrometer, ist und eine Spaltlänge (1) im Bereich zwischen 0,1 und 5 mm, vorzugsweise im Bereich zwischen 1 und 2 mm, liegt.

2. Expansionsorgan nach Anspruch 1, **dadurch gekennzeichnet, dass** die zumindest eine Bohrung (40) bzw der zumindest eine Kanal (48) im Wesentlichen in axialer Richtung des Magnetankers (30) verläuft.

3. Expansionsorgan nach Anspruch 1, **dadurch gekennzeichnet, dass** sich die Kontur des mindestens einen Drosselschlitzes (46) in axialer Richtung an zumindest einer Stelle sprunghaft erweitert.

4. Expansionsorgan nach Anspruch 1, **dadurch gekennzeichnet, dass** sich die Kontur des mindestens einen Drosselschlitzes (46) in axialer Richtung trapezförmig stetig erweitert.

5. Expansionsorgan nach Anspruch 1, **dadurch** gekenntzeichnet, dass sich die Kontur des mindestens einen Drosselschlitzes (46) in axialer Richtung gegenüber einer trapezförmigen Erweiterung mehr oder weniger stark konkav oder konvex stetig erweitert.

6. Expansionsorgan nach einem der vorhergehenden Ansprüche, **dadurch gekennzeichnet, dass** die mindestens eine Drosselöffnung (46) derart im Ventilkolben (28) des Ventils (22) positioniert ist, dass das Ventil (22) im stromlosen Zustand geöffnet ist.

7. Expansionsorgan nach einem der vorhergehenden Ansprüche, **dadurch gekennzeichnet, dass** die mindestens eine Drosselöffnung (46) derart in dem Ventilkolben (28) des Ventils (22) positioniert ist, dass das Ventil (22) im stromlosen Zustand geschlossen ist.

8. Expansionsorgan nach einem der vorhergehenden Ansprüche, **dadurch gekennzeichnet, dass** zwei oder mehr Drosselöffnungen derart positioniert sind, dass die auf die Zylinderoberfläche des Ventilkolbens (28) einwirkende Kraft zu null resultiert.

9. Expansionsorgan nach einem der vorhergehenden Ansprüche, **dadurch gekennzeichnet, dass** zumindest ein Element aus einer Gruppe von Elementen, die unter anderem den Ventilkolben (28), einen Stößel (34), den Magnetanker (30) und/oder die Kolbenführung (48) umfasst, reibungsarm, vorzugsweise mit einer Teflon- oder Kohlenstoffbeschichtung, beschichtet ist.

10. Expansionsorgan nach einem der vorhergehenden Ansprüche, **dadurch gekennzeichnet, dass** ein Ansteuersignal für den Betrieb des Ventils (22) ein im Wesentlichen pulsweitenmoduliertes Signal ist, mit einer Frequenz im Bereich von 100 bis 800 Hz, vorzugsweise im Bereich von 250 bis 400 Hz.

11. Expansionsorgan nach Anspruch 10, **dadurch gekennzeichnet, dass** das Tastverhältnis des pulsweitenmodulierten Signals mit einer niedrigeren Frequenz als die Pulsweitenmodulation selbst , vorzugsweise mit einer Frequenz zwischen 10 und 100 Hz, moduliert ist.

12. Klimaanlage, insbesondere Klimaanlage für ein Kraftfahrzeug, mit zumindest einem Kompressor (12), einem Kondensator oder Gaskühler (14), einem Expansionsorgan (16) und einem Verdampfer (18), die in geeigneter Weise durch Verbindungsmittel (20) verbunden sind, **dadurch gekennzeichnet, dass** das Expansionsorgan (16) durch mindestens ein Schiebesitzventil (22) gemäß einem der vorhergehenden Ansprüche 1 bis 11 gebildet ist.

13. Klimaanlage nach Anspruch 13, **dadurch gekennzeichnet, dass** das Kältemittel der Klimaanlage CO₂ ist.

14. Verwendung mindestens eines Schiebesitzventils (22) nach einem der vorhergehenden Ansprüche 1 bis 11, bei dem die Spaltgeometrie zwischen Ventilkolben (28) und Kolbenführung (48) des Schiebesitzventils reduziert ist, als Expansionsorgan (16) einer Klimaanlage (10), insbesondere einer CO₂-Klimaanlage eines Kraftfahrzeugs.

## Claims

1. Expansion member (16) for regulating the high pressure of a refrigerant in an air-conditioning system (10), the expansion member (16) being designed in the manner of a sliding seat valve (22) with at least one valve piston (28) and with a magnet armature (30) for moving the valve piston (28), the valve piston (28) having at least one essentially slit-shaped throttle orifice (46) running in the axial direction in the cylinder casing of the valve piston (28), **characterized in that** the valve piston (28) and/or the magnet armature (30) possess/possesses at least one bore (40) and/or at least one duct (38) ensuring that the pressure in the region of the valve piston (28) and of the magnet armature (30) is approximately equal, **in that** the at least one throttle orifice (46) has an overall orifice area in the range of approximately 1 to 7 mm², and **in that** the gap geometry between the valve piston (28) and a piston guide (48) of the sliding seat valve (22) is selected, to achieve a predeterminable leak-tightness in the closed state, in such a way that a gap height (h) is smaller than 15 micrometres, preferably smaller than 8 micrometres, and a gap length (1) lies in the range of between 0.1 and 5 mm, preferably in the range of between 1 and 2 mm.

2. Expansion member according to Claim 1,
**characterized in that** the at least one bore (40) or the at least one duct (48) runs essentially in the axial direction of the magnet armature (30).

3. Expansion member according to Claim 1,
**characterized in that** the contour of the at least one throttle slit (46) widens abruptly at at least one location in the axial direction.

4. Expansion member according to Claim 1,
**characterized in that** the contour of the at least one throttle slit (46) widens continuously, trapezoidally, in the axial direction.

5. Expansion member according to Claim 1,
**characterized in that** the contour of the at least one throttle slit (46) widens continuously, more or less concavely or convexly, with respect to a trapezoidal widening, in the axial direction.

6. Expansion member according to one of the preceding claims, **characterized in that** the at least one throttle orifice (46) is positioned in the valve piston (28) of the valve (22) in such a way that the valve (22) is opened in the currentless state.

7. Expansion member according to one of the preceding claims, **characterized in that** the at least one throttle orifice (46) is positioned in the valve piston (28) of the valve (22) in such a way that the valve (22) is closed in the currentless state.

8. Expansion member according to one of the preceding claims, **characterized in that** two or more throttle orifices are positioned in such a way that the force acting on the cylinder surface of the valve piston (28) results in zero.

9. Expansion member according to one of the preceding claims, **characterized in that** at least one element from a group of elements, which comprises inter alia the valve piston (28), a tappet (34), the magnet armature (30) and/or the piston guide (48), is coated, low-friction, preferably with a Teflon or carbon coating.

10. Expansion member according to one of the preceding claims, **characterized in that** an activation signal for operating the valve (22) is an essentially pulse-width-modulated signal with a frequency in the range of 100 to 800 Hz, preferably in the range of 250 to 400 Hz.

11. Expansion member according to Claim 10,
**characterized in that** the duty factor of the pulse-width-modulated signal is modulated with a lower frequency than the pulse-width modulation itself, preferably with a frequency of between 10 and 100 Hz.

12. Air-conditioning system, in particular air-conditioning system for a motor vehicle, with at least one compressor (12), with a condenser or gas cooler (14), with an expansion member (16) and with an evaporator (18) which are connected in a suitable way by connection means (20), **characterized in that** the expansion member (16) is formed by at least one sliding seat valve (22) according to one of the preceding claims 1 to 11.

13. Air-conditioning system according to Claim 13, **characterized in that** the refrigerant of the air-conditioning system is CO₂.

14. Use of at least one sliding seat valve (22) according to one of the preceding Claims 1 to 11, in which the gap geometry between the valve piston (28) and piston guide (48) of the sliding seat valve is reduced, as an expansion member (16) of an air-conditioning system (10), in particular of a CO₂ air-conditioning system of a motor vehicle.

## Revendications

1. Organe de détente (16) destiné à réguler la haute pression d'un fluide frigorifique dans une installation de climatisation (10), l'organe de détente (16) étant configuré comme soupape (22) à siège coulissant qui présente au moins un piston de soupape (28) et un induit magnétique (30) qui déplace le piston de soupape (28), le piston de soupape (28) présentant au moins une ouverture étranglée (46) qui s'étend essentiellement en forme de fente et en direction axiale dans l'enveloppe cylindrique du piston de soupape (28),
**caractérisé en ce que**
le piston de soupape (28) et/ou l'induit magnétique (30) possèdent au moins un alésage (40) et/ou au moins un canal (38) qui garantissent que les pressions sont approximativement identiques dans la zone occupée par le piston de soupape (28) et dans la zone occupée par l'induit magnétique (30),
**en ce que** la ou les ouvertures étranglées (46) ont une surface globale d'ouverture de l'ordre d'environ 1 à 7 m² et
**en ce que** la géométrie de l'interstice entre le piston de soupape (28) et un guide de piston (48) de la soupape (22) à siège coulissant est sélectionnée de manière à obtenir une étanchéité prédéterminée à l'état fermé, de telle sorte que la hauteur (h) de l'interstice soit inférieure à 15 micromètres et de préférence inférieure à 8 micromètres et que la longueur (1) de l'interstice soit comprise dans la plage de 0,1 à 5 mm et de préférence dans la plage de 1 à 2 mm.

2. Organe de détente selon la revendication 1, **caractérisé en ce que** le ou les alésages (40) et le ou les canaux (48) s'étendent essentiellement dans la direction axiale de l'induit magnétique (30).

3. Organe de détente selon la revendication 1, **caractérisé en ce que** le contour de la ou des fentes étranglées (46) s'évase brusquement en au moins un emplacement dans la direction axiale.

4. Organe de détente selon la revendication 1, **caractérisé en ce que** le contour de la ou des fentes étranglées (46) s'évase de manière constante en forme de trapèze dans la direction axiale.

5. Organe de détente selon la revendication 1, **caractérisé en ce que** le contour de la ou des fentes étranglées (46) s'évase progressivement dans la direction axiale, de manière plus ou moins concave ou plus ou moins convexe par rapport à un évasement en forme de trapèze.

6. Organe de détente selon l'une des revendications précédentes, **caractérisé en ce que** la ou les ouvertures étranglées (46) sont positionnées dans le piston (28) de la soupape (22) de telle sorte que la soupape (22) soit ouverte en l'absence de courant.

7. Organe de détente selon l'une des revendications précédentes, **caractérisé en ce que** la ou les ouvertures étranglées (46) sont disposées dans le piston (28) de la soupape (22) de telle sorte que la soupape (22) soit fermée en l'absence de courant.

8. Organe de détente selon l'une des revendications précédentes, **caractérisé en ce que** deux ou plusieurs ouvertures étranglées sont disposées de telle sorte que la résultante des forces qui agissent sur la surface cylindrique du piston de soupape (28) soit nulle.

9. Organe de détente selon l'une des revendications précédentes, **caractérisé en ce qu'**au moins un élément sélectionné dans un ensemble d'éléments qui comprend entre autres le piston de soupape (28), un poussoir (34), l'induit magnétique (30) et/ou le guide-piston (48), présente un faible frottement et de préférence est revêtu d'un revêtement de téflon ou de carbone.

10. Organe de détente selon l'une des revendications précédentes, **caractérisé en ce qu'**un signal de commande du fonctionnement de la soupape (22) est un signal essentiellement à modulation de la largeur des impulsions dont la fréquence des comprise dans la plage de 100 à 800 Hz et de préférence dans la plage de 250 à 400 Hz.

11. Organe de détente selon la revendication 10, **caractérisé en ce que** le rapport d'échantillonnage du signal à modulation de la largeur des impulsions est modulé à une fréquence plus basse que celle de la modulation de la largeur des impulsions proprement dites, et de préférence à une fréquence comprise entre 10 et 100 Hz.

12. Installation de climatisation, en particulier installation de climatisation pour véhicule automobile, qui présente au moins un compresseur (12), un condenseur ou refroidisseur de gaz (14), un organe de détente (16) et un évaporateur (18) qui sont reliés de manière appropriée par des moyens de liaison (20),
**caractérisée en ce que**
l'organe de détente (16) est formé par au moins une soupape (22) à siège coulissant selon l'une des revendications 1 à 11 qui précèdent.

13. Installation de climatisation selon la revendication 13, **caractérisée en ce que** le fluide frigorifique de l'installation de climatisation est le CO₂.

14. Utilisation d'au moins une soupape (22) à siège coulissant selon l'une des revendications 1 à 11 qui précèdent et dont la géométrie de l'interstice entre le piston de soupape (28) et la guide-piston (48) de la soupape à siège coulissant est réduite, comme organe de détente (16) d'une installation de climatisation (10) et en particulier d'une installation de climatisation au CO₂ d'un véhicule automobile.
